# EUROPEAN PATENT SPECIFICATION

(11) **EP 0 526 786 B1**
(45) Date of publication and mention of the grant of the patent: **22.10.1997**
(21) Application number: 92112244.6
(22) Date of filing: 17.07.1992
(51) Int. Cl.: C23F 11/173, C02F 5/12

(54) **Method for inhibiting corrosion of iron and mild steel in contact with industrial waters by using hydroxamic acid containing polymers as corrosion inhibitors**
Verfahren zur Korrosioninhibierung von Eisen und Weichstahl in Kontakt mit industrielle Wässern unter Verwendung von Hydroxamidsäure enthaltende Polymeren als Korrosionsinhibitoren
Méthode d'inhibition de la corrosion de fer et d'acier doux en contact avec des eaux industrielles en utilisant des polymères contenant de l'acide hydroxamique comme inhibiteurs de la corrosion

(30) Priority: 24.07.1991 US 734847
(43) Date of publication of application: 10.02.1993
(73) Proprietor: NALCO CHEMICAL COMPANY, Naperville Illinois 60563-1198 (US)
(72) Inventor: Fong, Dodd W., Naperville, Illinois 60564 (JP); Khambatta, Binaifer S., Naperville, Illinois 60563 (JP)
(74) Representative: Hartmann, Günter, Dr. Dipl.-Chem.

(56) References cited:
- EP-A- 0 244 584
- FR-A- 2 536 383
- FR-A- 2 630 728
- US-A- 4 536 296

## Description

### Field of the invention

The present invention relates to a method of inhibiting corrosion of iron and mild steel in contact with industrial waters which comprises treating said waters with an effective corrosion inhibiting amount of a specific water soluble polymer as defined below and having a weight average molecular weight ranging from 2,000 to 50,000.

### Background of the Invention

The inhibition of corrosion of iron and steel alloys in contact with industrial waters is extremely valuable. Corrosion difficulties cause immense costs and failure if corrosion of iron and steels in contct with industrial waters is not inhibited or prohibited.

The history of treatment of waters in contact with iron alloys and steels is extensive. Waters have been treated with inorganic components, such as chromate salts, but chromates have been found to be injurious to the environment, and these treatments have fallen out of favor.

Waters have been treated with inorganic or organic phosphates and phosphonates to inhibit corrosion. These materials are often expensive and must be formulated with other ingredients to provide optimal results.

FR-A-2 630 728 (Coatex S.A.) discloses a water-soluble copolymer consisting of unsaturated phosphoric acid monomer units and unsaturated monomer units having at least one acid function of hydroxamic type, this copolymer being usable as corrosion inhibitor for ferrous metals in industrial waters.

EP-A-0 244 584 (Nalco Chem. Co.) discloses the use of certain low molecular weight water-soluble polymers or copolymers as additive to clay based water drilling or completion muds. The polymers may include substituted hydroxylamine. There is no disclosure in this reference of the use of materials of this type for preventing corrosion.

However, none of these references describes a method of inhibiting corrosion of iron and mild steel in contact with industrial waters wherein corrosion inhibiting polymers are used which are compatible with those used according to the present invention.

The use of organic polymers, particularly relatively low molecular weight polymers, have been found useful in inhibiting under scale corrosion particularly of iron and mild steels in contact with industrial waters where the polymers are primarily used as anti-scalants, prohibiting scale formation of hardness constituents in the waters such hardness scales including calcium carbonate, hydroxyapatite, calcium hydroxide, magnesium carbonates, magnesium phosphates, magnesium hydroxides and mixed magnesium and calcium scales. When the surface of iron or steel is scaled, this provides for environments enhancing corrosion under the formed scale. Polymeric treatment of these waters prohibit or inhibit scale formation and, therefore, provide some relief in terms of enhanced corrosion rates in the presence of the scales, or below the scale.

In fact, some low molecular weight polymers have been found to be corrosion inhibitors in and of themselves, either in the presence or absence of hardness in the water. These corrosion inhibiting polymers have been primarily carboxylate containing polymers of relatively low molecular weight, and are often synthesized with monomers that are oleophilic in nature, such monomers including methyl and ethylacrylate.

It is important to note that although polymers which are useful as anti-scalants for hardness scales are also sometimes corrosion inhibitors, not all anti-scalant polymeric substances are necessarily corrosion inhibitors. In some cases materials which are anti-scalants, in fact, induce a higher rate of corrosion. This is particularly true in the absence of hardness species, such as calcium and magnesium.

On the other hand polymers containing hydroxamic acid functional groups have been known in the art. For example, A.J. Domb, in an article entitled "The synthesis of poly(hydroxamic acid) from poly(acrylamide)" in "Journal of Polymer Science: Part A: Polymer Chemistry", Vol. 26, 2623-2630 (1988), taught the synthesis of polyhydroxamic acids in either gel or water soluble forms by reacting polyacrylamides with hydroxylamine and basic aqueous solutions at room temperature. Domb's polymers contained 70 % hydroxamid acid groups, less than 5 % carboxylic acid groups, and 25 % unreacted amide groups. These polymers exhibited high affinity for ferric ion and for cupric ion in a pH range of from 1 to 5 with extremely high complexing or binding rate.

Normally, materials which exhibit very high complexing capabilities often enhance corrosion rates, for example, ethylenediamine tetracetic acid (EDTA), when added to industrial waters at high concentrations, have been demonstrated to enhance the rate of corrosion of iron and mild steels in contact with the EDTA containing waters.

The Domb article emphasizes the use of these polyhydroxamic acid polymers in terms of biopolymer research, since the polymers also possess anticoagulent and urease inhibitory activity. The article suggested the use of the polymers as ion exchange resins but did not suggest any use as anti-corrosion treatments.

In addition to the article above, various amide and/or carboxylate polymers modified by the reaction with hydroxylamine have also been taught in the following series of U.S. patents:

U.S. 2 959 574 (Woodbury) reacts copolymers of acrylonitrile and acrylamide with hydroxylamine to form copolymeric amidoxime compositions, which are taught to be useful as sedimentation or flocculating agents, for ore and industrial waste treatment, in mineral treatment, as coating compositions in film forming for producing wrapping materials, as thickeners, as protective colloids, in an adhesive formulations and as drilling mud additives. There is no teaching of the use of Woodbury's materials to inhibit corrosion of iron and steels in contact with industrial waters.

U.S. patent 4 532 046 (Meunier et al ), teaches a method to eliminate scaling of alkaline earth compounds from aqueous media by adding a treatment agent comprising of water soluble hydroxamic acid containing polymer. Again, there is no teaching in Meunier in regard to the corrosion inhibition of iron or steels in contact with industrial waters. Meunier emphasizes the use of his polymers in sea waters as antiscaling agent to prevent precipitation of alkaline earth salts or to limit the increase and the size of the crystals of alkaline earth precipitating salts, thereby inhibiting scale formation on surfaces in contact with sea waters.

U.S. patent 4 767 540 (Spitzer et al ) teaches the use of hydroxamic acid containaing polymers to reduce suspended solids in Bayer processing streams. The Bayer process treats raw bauxite ores and recovers therefrom aluminum trihydrate which is later treated to recover aluminum and to make alumina products. The Bayer process runs at very high caustic and very high dissolved solid levels and requires settling and filtration to remove iron oxides and other contaminants. Again, there if nothing in the Spitzer teachings related to corrosion control by treating industrial waters with hydroxamid acid polymers to inhibit corrosion of iron and steels in contact therewith.

U.S. patent 4 536 296 (Vio), teaches the use of clay based water drilling or completion muds, which muds are formulated with low molecular weight polymers or copolymers containing hydroxamic acids or thiohydroxamic acid groups. This patent teaches the use of his polymeric compositions to form extremely stable complexes with transition metals thereby contributing to dispersancy in the drilling muds. The polymers are taught to be effectively absorbed on particles of clay through the aluminum, calcium, magnesium iron and other cations present in the clay providing significant plugging or fluid loss effect when used as "dispersion additives". Again, no teaching is contained in this patent relative to the use of these type of hydroxamic acid polymers as corrosion inhibitors in industrial waters.

U.S. patent 4 810 296 (Guerro et al ) teaches the use of hydroxamic acid/acrylamide polymers and copolymers for retarding set times in cement slurries. The use of hydroxamated polymers in hydraulic cement slurries is unrelated to the use in industrial waters to prevent or inhibit corrosion of iron or steels in contct with those waters.

U.S. patent 4 868 248 (Sparapany et al ) teaches a method of synthesizing polyhydroxamic acid polymers from polyacrylic acids. Again, there is no teaching within this patent for the use as a corrosion inhibitor in industrial waters to protect iron ore steels against corrosion in contact with the industrial waters.

### Objects of the Invention

It is, therefore, an object of this invention to provide for a method of inhibiting corrosion of iron and mild steels in contact with industrial waters by treating the waters with specific polymers being free of phosphoric acid functional groups and containing hydroxyamic acid mer units as defined below.

It is another object of this invention to treat industrial waters with polymers having a molecular weight ranging from about 2,000 to about 50,000, which polymers contain at least one mole percent of hydroxamic acid mer units distributed randomly throughout the polymeric structure.

It is another object of this invention to treat these industrial waters in contact with iron and steels, particularly mild steels, with a combination of polymers, which combination contains a scale inhibiting and/or dispersing polymer which does not contain hydroxamic acid functional groups and a hydroxamic acid containing polymer.

Finally, it is an object of this invention, to treat these industrial waters with an effective corrosion inhibiting amount of either a corrosion inhibiting polymer being free of phosphoric acid functional groups and containing hydroxamic acid mer units, or a combination of a carboxylate containing scale inhibiting and/or dispersing polymer and the hydroxamic acid containing polymer said polymer combination being within the weight ratio of approximately 10:1 to 1:10 and said combination being added to the industrial waters so as to provide from 1 to 200 parts per million, based on waters treated, of the hydroxamic acid polymer.

### Summary of the invention

Acccording to a first aspect the subject-matter of the present invention is
a method of inhibiting corrosion of iron and mild steels in contact with industrial waters which method comprises treating said waters with an effective corrosion inhibiting amount of water soluble polymer having a weight average molecular weight ranging from 2,000 to 50,000, said polymer being free of phosphoric acid functional groups and containing at least 1 mole percent of hydroxamic acid mer unit having the structure: 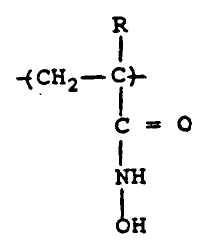 wherein R is individually chosen from H and CH₃ or its alkali metal, alkaline earth metal, ammonium protonated amine, or quaternary amine salts.

Preferable the used polymer has a molecular weight ranging from 2,500 to 25,000 and contains from 1.0 to 30 mole percent of the hydroxamic acid mer unit.

It is most preferred that the industrial waters be treated with polymers having a molecular weight in a range of from 5,000 to 25,000 and containing from 2.0 to 14 mole percent of the hydroxamic acid mer unit.

Whenever referring to the hydroxamid acid mer unit, we mean to include its presence along with the presence of any of its water soluble salts, for example, alkali metal salts, alkaline earth metal salts, ammonium salts, protonated amine salts, or quaternary amine salts.

In the practice of our invention, the most effective corrosion inhibiting amount of the polymers used to treat the waters in contact with iron and steels preferably ranges between 1 to 200 parts per million polymer, based on the weight of waters treated, more preferably between 2 and 200 parts per million polymer, based on the weight of waters treated, and most preferably ranging between 3 and 50 parts per million polymer, based on the weight of the waters treated.

The most preferred polymers are copolymers or terpolymers which contain at least one mole percent hydroxamid acid mer unit, preferably from 1 - 30 mole percent hydroxamic acid mer unit, wherein the polymer also contains monomers or repeating mer units derived from monomers chosen from the group consisting of acrylic acid, methacrylic acid, acrylamide, methacrylamide, sulfonated monomers, such as 2-acrylamido-2-methylpropanesulfonate, N-sulfomethylacrylamide, N-sulfoethylacrylamide, sulfonated styrenes, vinyl sulfonates, maleic anhydrides, itaconic acids, hydroxypropylacrylates, hydroxyethylacrylate and N-t-butylacrylamide.

It is particularly preferred to use copolymers, terpolymers, or above containing, in addition to the hydroxamic acid repeating mer unit, mer units obtained by polymerization of acrylic acid, methacrylic acid, acrylamide and methacrylamide.

The most preferred polymers containing hydroxamic acid mer units are the polymers that have the structure: 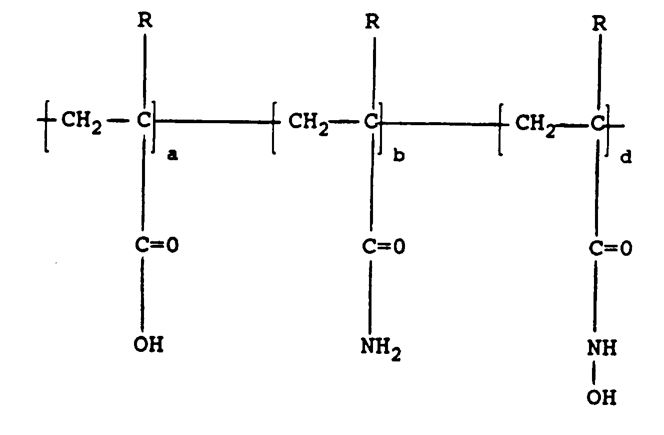 wherein R is chosen at each occurence from hydrogen and methyl, and a, b, and d have the following relationships:
1) the sum of a + b + d is sufficient to provide a molecular weight between 2,000 to 35,000;
2) the ratio, d/(a+b+d) ranges from 0.30 to 0.01;
3) the ratio, b/(a+b+d) ranges from 0.3 to 0.0;
4) the ratio, a/(a+b+d) ranges from 0.99 to 0.40.

Most preferably, the hydroxamic acid polymers above are those polymers wherein R is H and a, b, and d have the following relationships:
1) the sum of (a+b+d) is sufficient to provide a molecular weight ranging from 2,500 to 15,000;
2) the ratio, d/(a+b+d), ranges from 0.14 to 0.02;
3) the ratio, b/(a+b+d), ranges from 0.30 to 0.01;
4) the ratio, a/(a+b+d) ranges from 0.97 to 0.56;
and further wherein the polymer is used at from 1 to 100 ppm polymer, based on the weight of the water being treated.

As can be seen above, the most preferred polymers are polymers which contain acrylic acid or methacrylic acid, and optionally contain acrylamide or methacrylamide, along with the repeating mer unit containing the hydroxamic acid functional group. Again, the acidic mer units in the polymers described above may be present as their salts, as earlier described.

Although, as will be seen, and as taught in the prior art, the use of hydroxamic acid containing polymers as scale inhibitors is known, these polymers are not preferred scale inhibitors.

However, the hydroxamic acid polymers of this invention may be used in combination with other polymers, which polymers are dispersing and/or scale inhibiting polymers.

### Combination Treatment

According to a second aspect the subject-matter of the present invention is a method of inhibiting corrosion of iron and mild steel in contact with industrial waters containing hardness ions chosen from the group consisting of calcium, magnesium, or mixtures thereof, which method comprises treating said hardness containing waters with a combination of the following polymers:
A. Water soluble polymers having a molecular weight between 1,000 and 50,000 and containing carboxylate functionality, said polymers being free of hydroxamic acid functional groups, said carboxylate functionality obtained from the presence in the polymer of mer units having the structure: 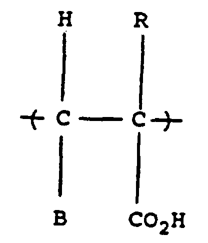 wherein
   R is individually chosen from H and CH₃;
   B is H, -CO₂H, or -CH₂CO₂H and
   further wherein said polymers also contain from 0 to 50 mole percent of at least one of the monomers chosen from the group consisting of acrylamide, methacrylamide, 2-acrylamido-2-methylpropanesulfonic acid, hydroxypropyl acrylate, hydroxyethyl acrylate, N-t-butylacrylamide, N-sulfomethyl acrylamide, N-sulfoethyl acrylamide, sulfonated styrene, vinyl sulfonate, isopropyl ester of acrylic acid, and itacoanic acid; and
B. a water soluble polymer having a molecular weight between 2,000 and 50,000 and containing at least one mole percent of a hydroxamic acid mer unit having the structure: 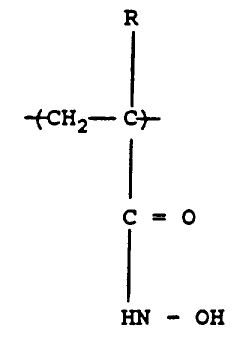 wherein R is individually chosen from H and CH₃,
   said polymer also containing from 50 to 99 mole percent of at least one of the monomers chosen from the group consisting of acrylic acid, methacrylic acid, acrylamide, methacrylamide, maleic anhydride, hydroxypropyl acrylate, hydroxyethyl acrylate, N-t-butyl acrylamide, acrylamido methyl propane sulfonate, sulfomethyl acrylamide, sulfoethyl acrylamide, sulfonated styrene, itaconic acid, and N-hydroxypropyl acrylamide, and further
   wherein the weight ratio of polymer A to polymer B is between 10:1 to 1:10.

When practicing our method of inhibiting corrosion of mild steels and iron in contact with industrial waters containing hardness ions, it is preferred to add to the hydroxamic acid polymer treatment a scale inhibiting or dispersant polymer, which polymer does not contain hydroxamic acid functional groups. These polymers are primarily water soluble polymers having a molecular weight between 1,000 and 50,000 and containing carboxylate functionality, said polymers again being free of hydroxamic acid functional groups, and said carboxylate functionality obtained from the presence in the polymer of repeating mer units, often randomly distributed, having the structure: 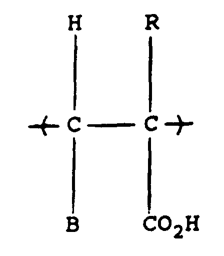 wherein R is hydrogen or methyl; B is hydrogen, -CO₂H oder -CH₂CO₂H, said polymers also containing from 0 to 50 mole percent of at least one of the monomers chosen from the group consisting of acrylamide, methacrylamide, 2-acrylamido-2-methylpropansulfonic acid, hydroxypropyl acrylate, hydroxyethyl acrylate, N-tert-butyl-acrylamide, N-sulfomethylacrylamide, N-sulfoethylacrylamide, AMPS, sulfonated styrene, vinyl sulfonate, isopropyl ester of acrylic acid, and itaconic acid. These scale inhibiting/dispersant polymers are examplified primarily by polymers that contain acrylic acid or methacrylic acid or both. These acrylic acid or methacrylic acid polymers may be homopolymers, copolymers, or terpolymers or above, but it is preferred that the polymer contains either acrylic acid, methacrylic acid, maleic anhydride, itaconic acid, or some carboxylate containing monomer unit said monomer unit or combination of monomer units being at least 50 percent of the molar ratios of total monomer used in the synthesis of these polymers.

The scale inhibiting and/or dispersing polymer when used in combination with our hydroxamic acid containing polymers, are preferably used within the weight ratio of scale inhibitor/dispersant polymer to hydroxamic acid polymer ranging between 10 : 1 to 1 : 10, preferably from 5 : 1 to 1 : 5. When a combination of polymers is used, the combination is normally added to the water such that the addition of the combination will provide from 1 to 200 parts per million of the hydroxamic acid containing polymer, based on the weight of the waters being treated.

The most preferred scale inhibiting/dispersant polymers are homopolymers of acrylic acid, methacrylic acid, or maleic anhydride and copolymers containing either acrylic acid, or methacrylic acid, or both, which copolymers also contain at least one of the monomers chosen from the group consisting of acrylamide, methacrylamide, maleic anhydride, hydroxypropylacrylates, hydroxyethylacrylate, N-tert-butyl-acrylamide, 2-acrylamido-2-methylpropanesulfonate, sulfomethylacrylamide, sulfoethylacrylamide, sulfonated styrene, vinyl sulfonate, itaconic acid, and N-hydroxypropylacrylamide. These polymers normally contain at least 40 mole percent of acrylic acid, methacrylic acid, or mixtures thereof with the remainder of the polymer containing at least one of the monomer units (or mer units) mentioned above.

Other monomers may also be used with these polymers containing acrylic acid, methacrylic acid, or maleic anhydride, itacoanic acid, and the other monomers as above. Other monomers may include acrylonitrile, methyl acrylate and ethyl acrylate, but since these monomers are primarily hydrophobic and not hydrophilic, the content of the hydrophobic monomer normally is limited to less than 10 mole percent, and preferably less than 5 mole percent in these polymers.

The water soluble dispersing and/or scale inhibiting polymers have a molecular weight ranging from 1,000 to 50,000, preferably from 2,500 to 35,000, and most preferably from 3,000 to 25,000.

According to a preferred embodiment of the present invention
the polymers A are chosen from homopolymers of acrylic acid, methacrylic acid, and maleic anhydride, and from copolymers of acrylic acid with at least one of the monomers chosen from the group consisting of methacrylic acid, maleic anhydride, acrylamide, methacrylamide, hydroxypropyl acrylate, N-t-butyl acrylamide, sulfonated styrene, vinyl sulfonate, and itaconic acid; and
the polymers B contain from 1 to 30 mole percent of the mer unit: 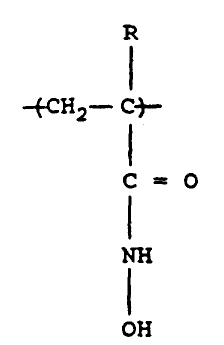 and from 99 to 70 mole percent of at least one of the monomers chosen from the group consisting of acrylic acid, methacrylic acid, acrylamide, methacrylamide, sulfomethyl acrylamide and sulfoethyl acrylamide; and further
wherein the ratio of A:B polymers ranges from 5:1 to 1:5.

When the scale inhibiting/dispersant polymers are used, they may be used with the hydroxamic polymers either singly, or they may be used themselves in combinations. The combinations may include any of the polymers derivable from the definitions above but are preferably used in combinations containing homopolymers of acrylic acid, homopolymers of methacrylic acid, copolymers of acrylic acid with at least one monomer chosen from the group consisting of methacrylic acid, acrylamide, methacrylamide, the hydroxypropylacrylates, N-t-butylacrylamide, 2-acrylamido-2-methylpropane sulfonic acid, sulfomethylacrylamide, sulfoethylacrylamide, and itacoanic acid; and copolymers of maleic anhydride with at least one of the monomers chosen from the group consisting of acrylic acid, methacrylic acid, vinyl sulfonate, styrene sulfonate, and itaconic acid.

By the terms, hydroxypropylacrylates, we mean any structure obtained by the reaction of acrylic acid with propylene oxide leading to ester groups having the formulae: 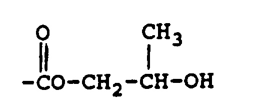 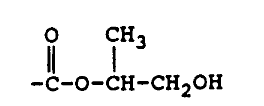 or mixtures thereof.

According to a third aspect the subject-matter of the present invention is a method of inhibiting corrosion of iron and mild steel in contact with hard waters which comprises treating said hard waters with an effective corrosion inhibiting amount of a mixture of polymers, said mixture comprising at least one of the following "A" polymers;

### "A" Polymers

1. Homopolymers of acrylic acid;
2. Homopolymers of methacrylic acid;
3. Copolymers of acrylic acid with at least one monomer chosen from the group consisting of methacrylic acid, acrylamide, hydroxypropyl acrylate, N-t-butyl acrylamide, 2-acrylamido-2-methylpropane sulfonic acid, sulfomethacrylamide, sulfoethylacrylamide, and itaconic acid;
4. Copolymers of maleic anhydride with at least one of the monomers chosen from the group acrylic acid, methacrylic acid, sulfonated styrene, vinyl sulfonate and itaconic acid;
and at least one of the following B polymers having the structure:

### "B" Polymers

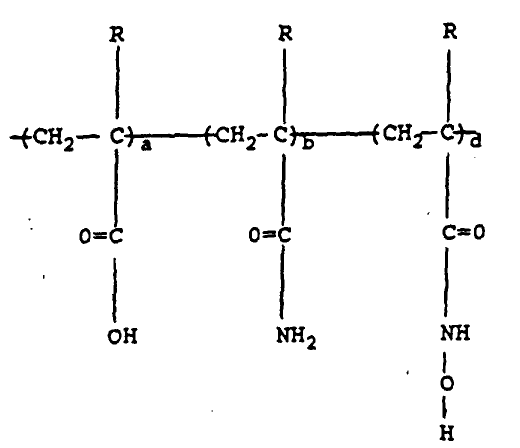

wherein R is chosen at each occurrence from the group consisting of H and CH₃; and the following relationships exist:
1) the sum, (a+b+d), is sufficient to provide for a molecular weight ranging from 2,000 to 50,000;
2) the ratio, a/(a+b+d), ranges from 0.99 to 0.40;
3) the ratio, b/(a+b+d), ranges from 0.30 to 0.0;
4) the ratio, d/(a+b+d), ranges from 0.01 to 0.30;
and further wherein said admixtures of A polymers and B polymers are within the weight ratio ranging from 10:1 to 1:10.

When used in combination with scale inhibiting/dispersing polymers, i.e. A polymers, the hydroxamic acid containing polymer, i.e. B polymer, is preferably the terpolymer described above, which terpolymer has the structure: 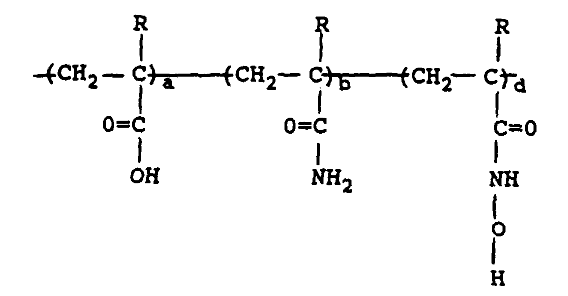 wherein R is chosen from the group consisting of hydrogen, and methyl, and the following relationships exist:
1) the sum, (a+b+d), is sufficient to provide for a molecular weight ranging from 2,000 to 50,000;
2) the ratio, a/(a+b+d), ranges from 0.99 to 0.40;
3) the ratio, b/(a+b+d), ranges from 0.30 to 0.0;
4) the ratio, d/(a+b+d), ranges from 0.01 to 0.30;
as before, the acidic mer units, containing either carboxylic acids, or hydroxamic acids, or both, may be present as their salts, or mixtures thereof.

When these mixtures are used, the group A polymers, that is the scale inhibiting/dispersing polymers, and the group B polymers, that is the hydroxamic acid containing polymers, are used within the weight ratio ranging from 10:1 to 1:10, preferably from 5:1 to 1:5. As before when the combination is used, the combination is preferably added to waters containing hardness ions, such as calcium, magnesium, and the like, so-called "hard waters", so as to provide from about 1 to about 50 parts per million of the hydroxamid acid polymers in the hard waters, based upon the weight of the hard waters treated.

### Other Corrosion Inhibitors

In addition to the use of the hydroxamic acid polymers of this invention to inhibit corrosion, it is anticipated that these polymers may be used also in combination with known inhibitors for corrosion of iron and steel in contact with industrial waters. These inhibitors include ortho-phosphates, organophosphates, phosphonates, polyolphosphate esters, and mixtures thereof. They can also include zinc ions, inorganic chromates, and other species shown to protect iron and steel alloys from corrosion when these iron and steel materials are exposed to industrial waters.

When other corrosion inhibitors are used, it is preferred to use orthophosphate or orthophosphate sources, organophosphonates, such as 1, 2, 4-tri-carboxy-2-phosphono-butane (often referred to as PBTC) and HEDP, (1-Hydroxyethylidene)bis-phosphonic acid or the so called Dequest ® product (Monsanto).

Preferably furthermore other corrosion inhibitors are added chosen from at least one of the group consisting of orthophosphate, HEDP, PBTC, tolyltriazole, zinc salts, chromate salts, nitrite/nitrate salts, and polyphosphate.

The hydroxamic acid polymers of this invention may, in fact, be substituted partially or completely for the normal organophosphonate corrosion inhibitors known in the art. When completely substituted for the organophosphonate, the hydroxamic acid polymers of this invention can be as effective in inhibiting corrosion as the organophosphonates. When partially substituted for the organophosphonates, the formulation containing a mixture of the organophosphonates with the hydroxamic acid polymers of this invention, particularly when in the presence of the scale inhibiting/dispersant polymers, provides not only superior corrosion protection, but also excellent scale protection.

To examplify our invention, we provide the following experimental information.

### Experiments

In the experiments below, the following test was performed:

### Electrochemical Test

Both the Tafel plots and linear polarization resistance tests are conducted in the same water chemistry and conditions. The test solution for the electrochemical corrosion cell is prepared by adding calcium, magnesium, various inhibitors, and bicarbonate to deionized water to obtain 360 ppm Ca⁺², 200 ppm Mg⁺², 440 ppm HCO₃ (all as CaCO₃). Temperature is maintained at 49°C (120° F) and the solution is aerated throughout the test period. The pH is uncontrolled. A standard three electrode cell is assembled for the polarization studies. Pre-polished mild steel specimens were used as the rotating working electrode, at a speed of 500 rpm. All potential measurements are made against a saturated calomel reference electrode. Two graphite rods are used as the counter electrode. Polarization resistance measurements are conducted within ± 20 mV of the corrosion potential at a scan rate of 0.1 mV/sec. Tafel plots are performed by polarizing the mild steel specimen at 250 mV cathodically and anodically from the corrosion potential.

The electrochemical test provide for measurement of Tafel plots and linear polarization resistance data to measure corrosion inhibition activity. This activity is reported as a corrosion rate, and the lower corrosion rate, the better the polymer is as a corrosion inhibitor.

Representative of the polymers of this invention are the polymers described in Table I.

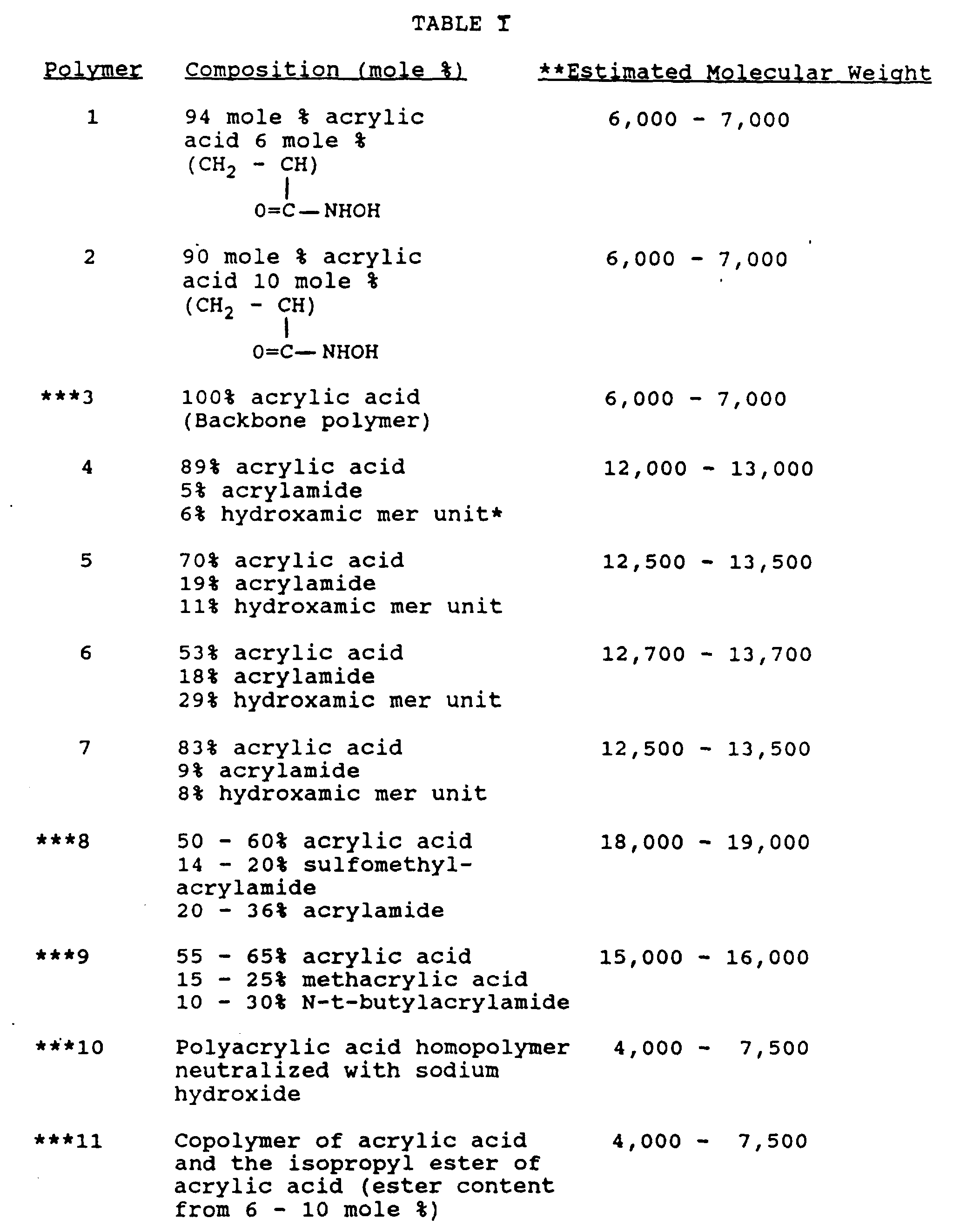

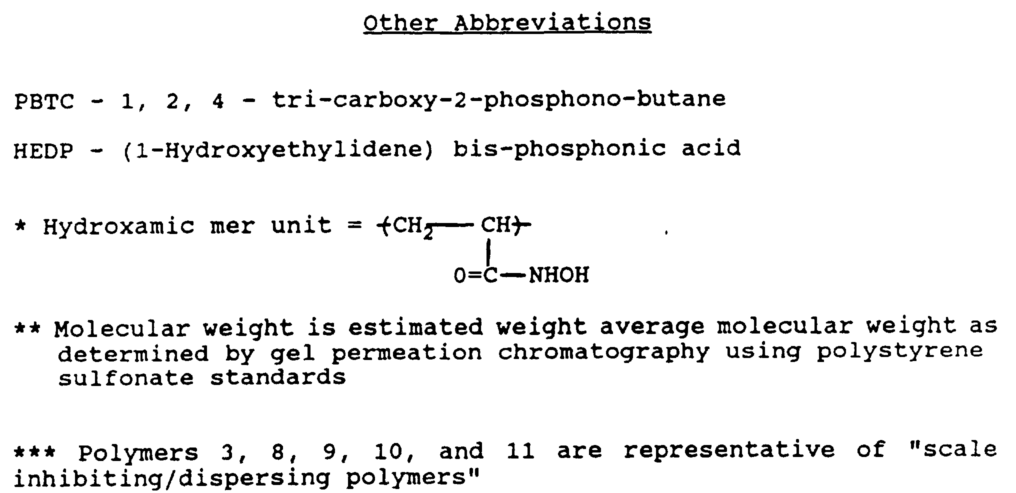

Using the listed polymers electrochemical screening tests were performed to determine corrosion rates.

The water chemistry and test conditions, as well as the results are presented in the following Table II.

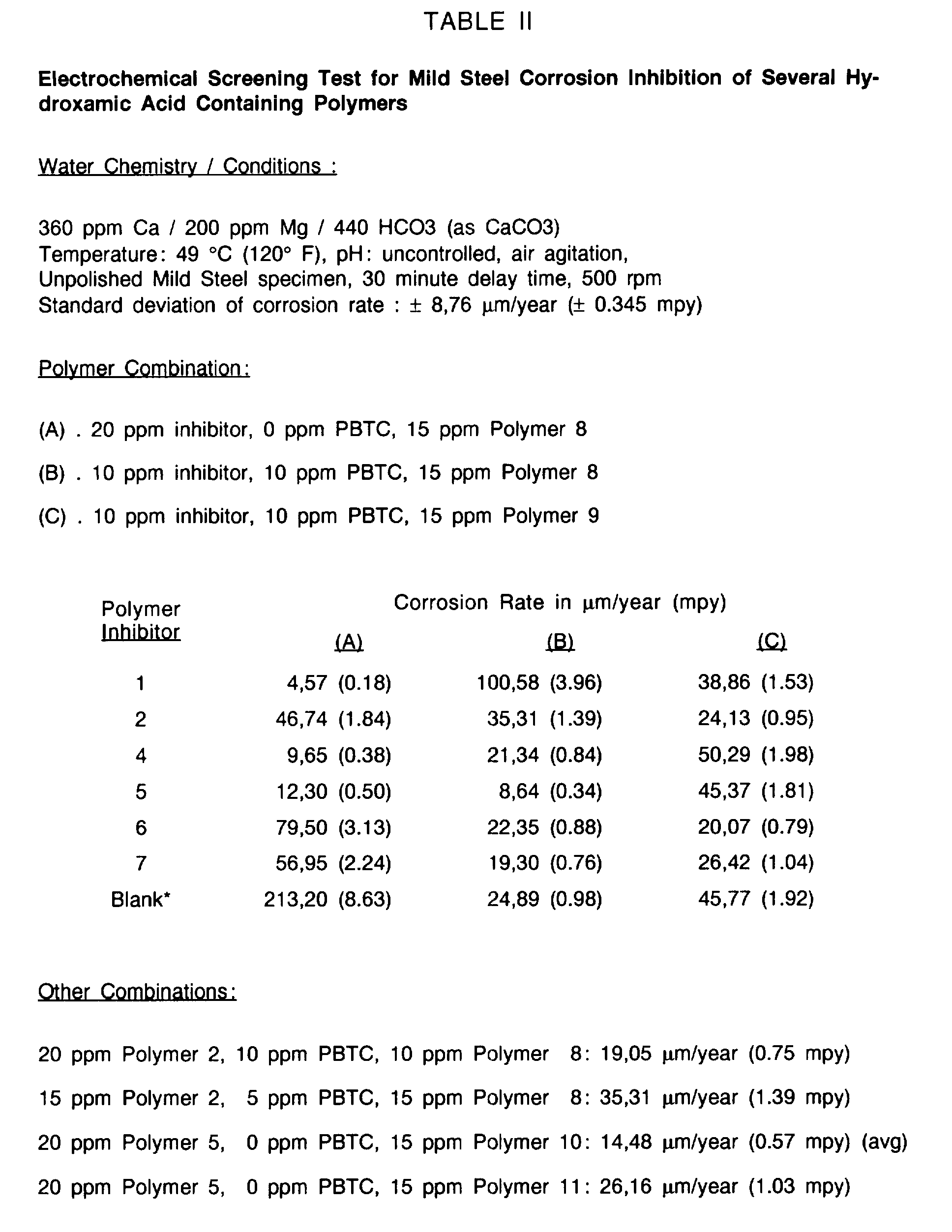

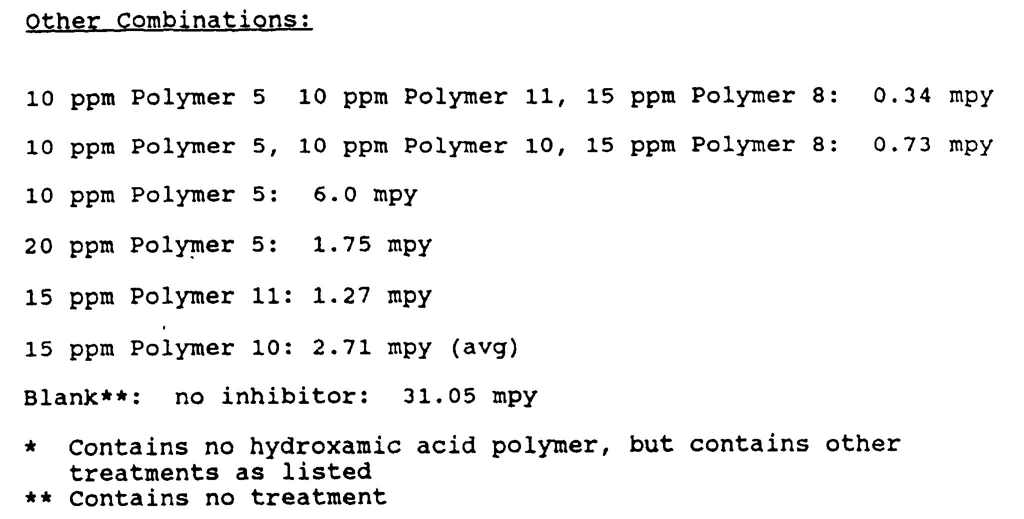

### Summary

The test results above show clearly that the hydroxamic polymers of this invention can be used to inhibit corrosion of steels in contact with industrial waters, either alone or particularly in combination with hardness reactive polymers, such as the carboxylate containing polymers described above. Also, the hydroxamic acid polymers by themselves or in combination with hardness reacting polymers inhibit corrosion of iron and steel in contact with industrial waters when present in those industrial waters, either with or without other known corrosion inhibitors.

Also as can be seen from the results in Table II, the hydroxamic acid polymers can substitute for organophosphonates when used in combination with phosphonates or when used alone in the absence of these organophosphonate corrosion inhibitors.

## Claims

1. A method of inhibiting corrosion of iron and mild steel in contact with industrial waters which comprises treating said waters with an effective corrosion inhibiting amount of water soluble polymer having a weight average molecular weight ranging from 2,000 to 50,000, said polymer being free of phosphoric acid functional groups and containing at least 1 mole percent of hydroxamic acid mer unit having the structure: 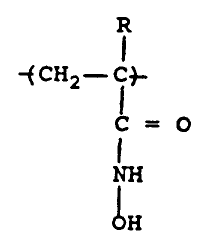 wherein R is individually chosen from H and CH₃ or its alkali metal, alkaline earth metal, ammonium protonated amine, or quaternary amine salts.

2. The method of Claim 1 wherein the polymer has a molecular weight ranging from 2,500 to 25,000 and contains from 1.0 to 30 mole percent of the hydroxamic acid mer unit.

3. The method of Claim 2 wherein the polymer has a molecular weight of from 5,000 to 25,000 and contains from 2.0 to 14 mole percent of the hydroxamic acid mer unit.

4. The method of any of Claims 1 to 3 wherein the effective corrosion inhibiting amount of polymer used to treat said waters ranges between 1 and 200 parts per million polymer, based on weight of waters treated.

5. The method of any of Claims 1 to 4 wherein the polymer has the structure: 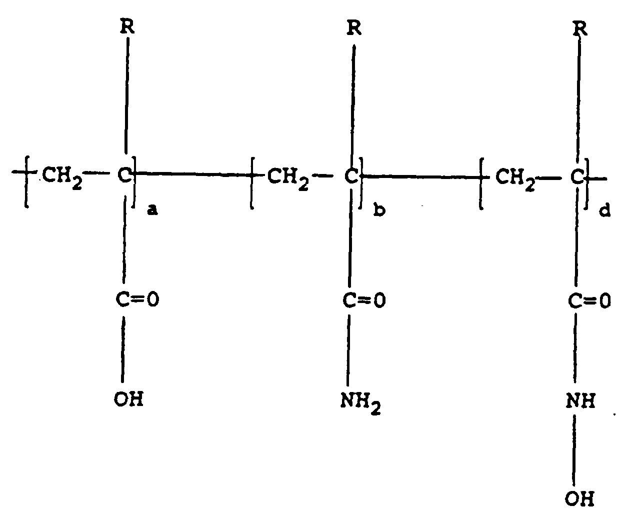 wherein
R is as defined in Claim 1 and
a, b, and d have the following relationships:
1) the sum of a + b + d is sufficient to provide a molecular weight between 2,000 and 35,000;
2) the ratio, d/(a+b+d) ranges from 0.30 to 0.01;
3) the ratio, b/(a+b+d) ranges from 0.3 to 0.0;
4) the ratio, a/(a+b+d) ranges from 0.99 to 0.40.

6. The method of Claim 5 wherein R is H and a, b, and d have the following relationships:
1) the sum of (a+b+d) is sufficient to provide a molecular weight ranging from 2,500 to 15,000;
2) the ratio, d/(a+b+d), ranges from 0.14 to 0.02;
3) the ratio, b/(a+b+d), ranges from 0.30 to 0.01;
4) the ratio, a/(a+b+d) ranges from 0.97 to 0.56;
and further wherein the polymer is used at from 1 to 100 ppm polymer, based on the weight of the water being treated.

7. A method of inhibiting corrosion of iron and mild steel in contact with industrial waters containing hardness ions chosen from the group consisting of calcium, magnesium, or mixtures thereof, which method comprises treating said hardness containing waters with a combination of the following polymers:
A. Water soluble polymers having a molecular weight between 1,000 and 50,000 and containing carboxylate functionality, said polymers being free of hydroxamic acid functional groups, said carboxylate functionality obtained from the presence in the polymer of mer units having the structure: 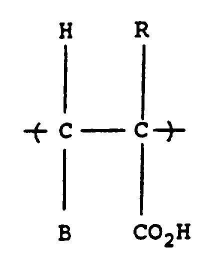 wherein
R is individually chosen from H and CH₃;
B is H, -CO₂H, or -CH₂CO₂H and
further wherein said polymers also contain from 0 to 50 mole percent of at least one of the monomers chosen from the group consisting of acrylamide, methacrylamide, 2-acrylamido-2-methylpropanesulfonic acid, hydroxypropyl acrylate, hydroxyethyl acrylate, N-t-butylacrylamide, N-sulfomethyl acrylamide, N-sulfoethyl acrylamide, sulfonated styrene, vinyl sulfonate, isopropyl ester of acrylic acid, and itacoanic acid; and
B. a water soluble polymer being free of phosphoric acid functional groups and having a molecular weight between 2,000 and 50,000 and containing at least one mole percent of hydroxamic acid mer unit having the structure: 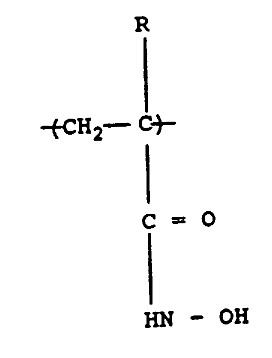 wherein R is individually chosen from H and CH₃, or its alkali metal, alkaline earth metal, ammonium protonated amine, or quaternary amine salts.
said polymer also containing from 50 to 99 mole percent of at least one of the monomers chosen from the group consisting of acrylic acid, methacrylic acid, acrylamide, methacrylamide, maleic anhydride, hydroxypropyl acrylate, hydroxyethyl acrylate, N-t-butyl acrylamide, acrylamido methyl propane sulfonate, sulfomethyl acrylamide, sulfoethyl acrylamide, sulfonated styrene, itaconic acid, and N-hydroxypropyl acrylamide, and further
wherein the weight ratio of polymer A to polymer B is between 10:1 and 1:10.

8. The method of Claim 7 wherein
the polymers A are chosen from homopolymers of acrylic acid, methacrylic acid, and maleic anhydride, and from copolymers of acrylic acid with at least one of the monomers chosen from the group consisting of methacrylic acid, maleic anhydride, acrylamide, methacrylamide, hydroxypropyl acrylate, N-t-butyl acrylamide, sulfonated styrene, vinyl sulfonate, and itaconic acid; and
the polymers B contain from 1 to 30 mole percent of the mer unit: 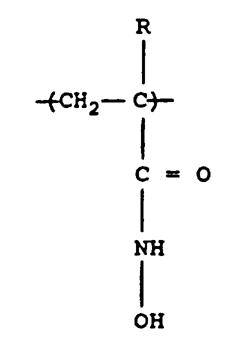 and from 99 to 70 mole percent of at least one of the monomers chosen from the group consisting of acrylic acid, methacrylic acid, acrylamide, methacrylamide, sulfomethyl acrylamide and sulfoethyl acrylamide; and further
wherein the ratio of A:B polymers ranges from 5:1 to 1:5.

9. The method of claim 7 or 8 wherein said mixture of polymers comprises at least one of the following "A" polymers;
"A" Polymers
1. Homopolymers of acrylic acid;
2. Homopolymers of methacrylic acid;
3. Copolymers of acrylic acid with at least one monomer chosen from the group consisting of methacrylic acid, acrylamide, hydroxypropyl acrylate, N-t-butyl acrylamide, 2-acrylamido-2-methylpropane sulfonic acid, sulfomethacrylamide, sulfoethylacrylamide, and itaconic acid;
4. Copolymers of maleic anhydride with at least one of the monomers chosen from the group acrylic acid, methacrylic acid, sulfonated styrene, vinyl sulfonate and itaconic acid;
and at least one of the following "B" polymers having the structure:
"B" Polymers 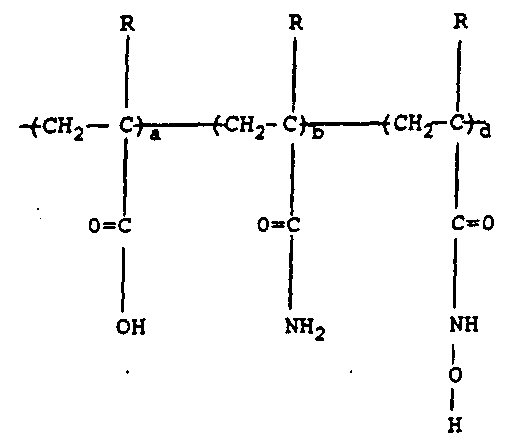
wherein R is chosen at each occurrence from the group consisting of H and CH₃, and the following relationships exist:
1) the sum, (a+b+d), is sufficient to provide for a molecular weight ranging from 2,000 to 50,000;
2) the ratio, a/(a+b+d), ranges from 0.99 to 0.40;
3) the ratio, b/(a+b+d), ranges from 0.30 to 0.0;
4) the ratio, d/(a+b+d), ranges from 0.01 to 0.30;
and further wherein said admixtures of A polymers and B polymers are within the weight ratio ranging from 10:1 to 1:10.

10. The method of Claim 9 wherein the admixture of A and B polymers is added to hard waters so as to provide from 1 to 50 ppm of B polymers, based on hard waters treated.

11. The method of any of Claims 1 to 10 wherein furthermore other corrosion inhibitors are added chosen from at least one of the group consisting of orthophosphate, HEDP, PBTC, tolyltriazole, zinc salts, chromate salts, nitrite/nitrate salts, and polyphosphate.

## Patentansprüche

1. Verfahren zur Inhibierung der Korrosion von Eisen und Flußstahl im Kontakt mit Industriewässern, das umfaßt die Behandlung der genannten Wässer mit einer wirksamen, Korrosions-inhibierenden Menge eines wasserlöslichen Polymers, das ein gewichtsdurchschnittliches Molekulargewicht in dem Bereich von 2 000 bis 50 000 hat, frei von funktionellen Phosphorsäuregruppen ist und mindestens 1 Mol-% Hydroxamidsäure-Mer-Einheiten mit der Struktur aufweist: 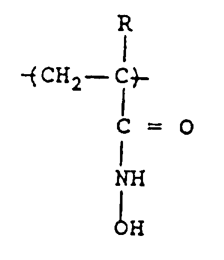 worin R einzeln ausgewählt wird aus der Gruppe H und CH₃ oder ihren Alkalimetall-, Erdalkalimetall-, Ammoniumprotonierten Amin- oder quaternären Aminsalzen.

2. Verfahren nach Anspruch 1, worin das Polymer ein Molekulargewicht in dem Bereich von 2 500 bis 25 000 hat und 1,0 bis 30 Mol-% Hydroxamidsäure-Mer-Einheiten enthält.

3. Verfahren nach Anspruch 2, worin das Polymer ein Molekulargewicht von 5 000 bis 25 000 hat und 2,0 bis 14 Mol-% Hydroxamidsäure-Mer-Einheiten enthält.

4. Verfahren nach einem der Ansprüche 1 bis 3, worin die zum Behandeln der genannten Wässer verwendete wirksame Korrosions-inhibierende Menge des Polymers in dem Bereich zwischen 1 und 200 Teilen pro Million Teilen Polymer, bezogen auf das Gewicht der behandelten Wässer, liegt.

5. Verfahren nach einem der Ansprüche 1 bis 4, worin das Polymer die Struktur hat: 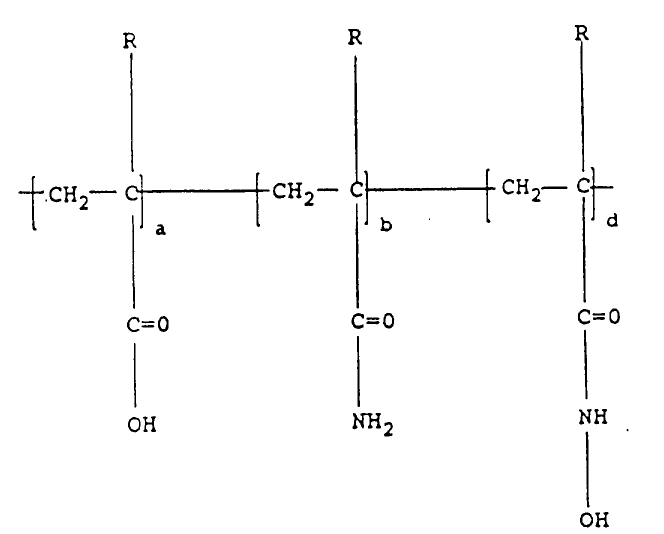 worin
R wie in Anspruch 1 definiert ist und
a, b, und d die nachstehend angegebenen Beziehungen untereinander aufweisen:
1) die Summe von a + b + d reicht aus, um ein Molekulargewicht zwischen 2 000 und 35 000 zu ergeben;
2) das Verhältnis d/(a+b+d) liegt in dem Bereich von 0,30 bis 0,01;
3) das Verhältnis b/(a+b+d) liegt in dem Bereich von 0,3 bis 0,0;
4) das Verhältnis a/(a+b+d) liegt in dem Bereich von 0,99 bis 0,40.

6. Verfahren nach Anspruch 5, worin R für H steht und a, b und d untereinander die folgenden Beziehungen aufweisen:
1) die Summe von (a+b+d) reicht aus, um ein Molekulargewicht in dem Bereich von 2 500 bis 15 000 zu ergeben;
2) das Verhältnis d/(a+b+d) liegt in dem Bereich von 0,14 bis 0,02;
3) das Verhältnis b/(a+b+d), liegt in dem Bereich von 0,30 bis 0,01;
4) das Verhältnis a/(a+b+d) liegt in dem Bereich von 0,97 bis 0,56;
und worin außerdem das Polymer in einer Menge von 1 bis 100 ppm Polymer, bezogen auf das Gewicht des behandelten Wassers, verwendet wird.

7. Verfahren zur Inhibierung der Korrosion von Eisen und Flußstahl im Kontakt mit Industriewässern, die Härte-Ionen, ausgewählt aus der Gruppe, die besteht aus Calcium, Magnesium oder Mischungen davon, enthalten, das umfaßt die Behandlung der genannten, Härte-Ionen enthaltenden Wässer mit einer Kombination der folgenden Polymeren:
A. wasserlöslichen Polymeren, die ein Molekulargewicht zwischen 1 000 und 50 000 haben und eine Carboxylat-Funktionalität aufweisen, wobei die genannten Polymeren frei von funktionellen Hydroxamidsäure-Gruppen sind und die genannte Carboxylat-Funktionalität stammt aus der Anwesenheit von Mer-Einheiten mit der nachstehend angegebenen Struktur in dem Polymer: 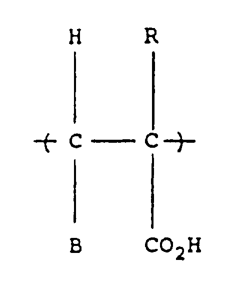 worin
R einzeln ausgewählt wird aus H und CH₃;
B steht für H, -CO₂H oder -CH₂CO₂H und
wobei die genannten Polymeren außerdem 0 bis 50 Mol-% mindestens eines der Monomeren, ausgewählt aus der Gruppe, die besteht aus Acrylamid, Methacrylamid, 2-Acrylamido-2-methylpropansulfonsäure, Hydroxypropylacrylat, Hydroxyethylacrylat, N-t-Butylacrylamid, N-Sulfomethylacrylamid, N-Sulfoethylacrylamid, sulfoniertem Styrol, Vinylsulfonat, Isopropylester von Acrylsäure und Itaconsäure, enthalten; und
B. einem wasserlöslichen Polymer, das frei von funktionellen Phosphorsäure-Gruppen ist und ein Molekulargewicht zwischen 2 000 und 50 000 hat und mindestens 1 Mol-% Hydroxamidsäure-Mer-Einheiten mit der Struktur enthält: 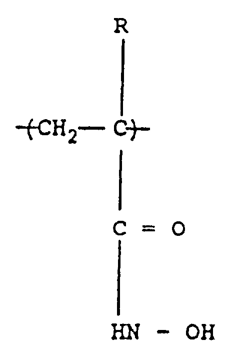 worin R einzeln ausgewählt wird aus H und CH₃, oder ihren Alkalimetall- Erdalkalimetall-, Ammonium-protonierten Amin- oder quaternären Aminsalzen,
wobei das genannte Polymer außerdem 50 bis 99 Mol-% mindestens eines der Monomeren, ausgewählt aus der Gruppe, die besteht aus Acrylsäure, Methacrylsäure, Acrylamid, Methacrylamid, Maleinsäureanhydrid, Hydroxypropylacrylat, Hydroxyethylacrylat, N-t-Butylacrylamid, Acrylamidomethylpropansulfonat, Sulfomethylacrylamid, Sulfoethylacrylamid, sulfoniertem Styrol, Itaconsäure und N-Hydroxypropylacrylamid, enthält und
wobei außerdem das Gewichtsverhältnis von Polymer A zu Polymer B zwischen 10:1 und 1:10 liegt.

8. Verfahren nach Anspruch 7, worin
die Polymeren A ausgewählt werden aus Homopolymeren von Acrylsäure, Methacrylsäure und Maleinsäureanhydrid und aus Copolymeren von Acrylsäure mit mindestens einem der Monomeren, ausgewählt aus der Gruppe, die besteht aus Methacrylsäure, Maleinsäureanhydrid, Acrylamid, Methacrylamid, Hydroxypropylacrylat, N-t-Butylacrylamid, sulfoniertem Styrol, Vinylsulfonat und Itaconsäure; und
die Polymeren B 1 bis 30 Mol-% der folgenden Mer-Einheit: 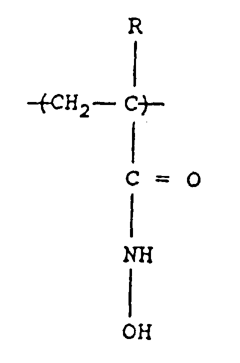 und
99 bis 70 Mol-% mindestens eines der Monomeren, ausgewählt aus der Gruppe, die besteht aus Acrylsäure, Methacrylsäure, Acrylamid, Methacrylamid, Sulfomethylacrylamid und Sulfoethylacrylamid, enthalten; und
außerdem das Verhältnis zwischen den Polymeren A und den Polymeren B in dem Bereich von 5:1 bis 1:5 liegt.

9. Verfahren nach Anspruch 7 oder 8, worin die genannte Mischung von Polymeren mindestens eines der folgenden "A"-Polymeren
"A" Polymere:
1. Homopolymere von Acrylsäure;
2. Homopolymere von Methacrylsäure;
3. Copolymere von Acrylsäure mit mindestens einem Monomer, ausgewählt aus der Gruppe, die besteht aus Methacrylsäure, Acrylamid, Hydroxypropylacrylat, N-t-Butylacrylamid, 2-Acrylamido-2-methylpropansulfonsäure, Sulfomethacrylamid, Sulfoethylacrylamid und Itaconsäure;
4. Copolymere von Maleinsäureanhydrid mit mindestens einem der Monomeren, ausgewählt aus der Gruppe, die besteht aus Acrylsäure, Methacrylsäure, sulfoniertem Styrol, Vinylsulfonat und Itaconsäure;
und mindestens eines der folgenden "B"-Polymeren mit der Struktur umfaßt:
"B" Polymere: 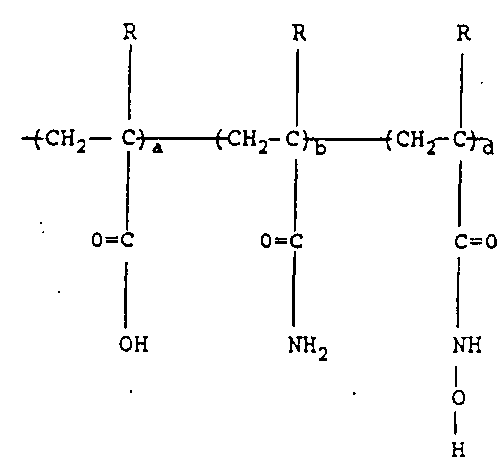
worin R jeweils ausgewählt wird aus der Gruppe, die besteht aus H und CH₃; und die folgenden Beziehungen vorliegen:
1) die Summe (a+b+d) reicht aus, um ein Molekulargewicht in dem Bereich von 2 000 bis 50 000 zu ergeben;
2) das Verhältnis a/(a+b+d) liegt in dem Bereich von 0,99 bis 0,40;
3) das Verhältnis b/(a+b+d) liegt in dem Bereich von 0,30 bis 0,0;
4) das Verhältnis d/(a+b+d) liegt in dem Bereich von 0,01 bis 0,30;
und worin außerdem die genannten Gemische von Polymeren A und Polymeren B innerhalb des Gewichtsverhältnisses liegen, das in dem Bereich von 10:1 bis 1:10 liegt.

10. Verfahren nach Anspruch 9, worin die Mischung von A- und B-Polymeren den harten Wässern in der Weise zugesetzt wird, daß 1 bis 50 ppm B-Polymere, bezogen auf die behandelten harten Wässer, erhalten werden.

11. Verfahren nach einem der Ansprüche 1 bis 10, worin außerdem weitere(andere) Korrosionsinhibitoren zugegeben werden, die ausgewählt werden aus mindestens einem aus der Gruppe, die besteht aus Orthophosphat, HEDP, PBTC, Tolyltriazol, Zinksalzen, Chromatsalzen, Nitrit/Nitratsalzen und Polyphosphat.

## Revendications

1. Procédé pour l'inhibition de la corrosion de fer et d'acier doux en contact avec des eaux industriels, comprenant le traitement des eaux dites avec une quantité effective et corrosion-inhibitrice d'un polymère soluble dans l'eau ayant un poids moléculaire moyenne en poids dans la gamme de 2 000 à 50 000 et étant dépourvu des groupes de l'acide phosphorique et comprenant au moins 1 % en mole de l'unité de mer de l'acide hydroxamique ayant la structure: 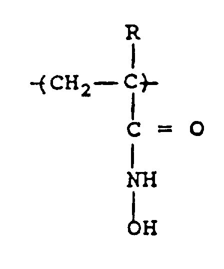 dans laquelle R est choisi individuellement du groupe formé par H et CH₃ ou de ses sels de metal alcalin, de metal alcalino-terreux, d'amine de l'ammonium protoné ou d'amine quatérnaire.

2. Procédé selon la revendication 1, dans lequel le polymère a un poids moléculaire dans la gamme de 2 500 à 25 000 et contient l'unité de mer de l'acide hydroxamique en une quantité de 1,0 à 30 % en mole.

3. Procédé selon la revendication 2, dans lequel le polymère a un poids moléculaire entre 5 000 et 25 000 et contient l'unité de mer de l'acide hydroxamique en une quantité de 2,0 à 14 % en mole.

4. Procédé selon une des revendications 1 à 3, dans lequel la quantité effective et corrosion-inhibitrice du polymère qui est utilisé pour le traitement des eaux dites est située dans la gamme de 1 à 200 parts par million parts de polymère, basé sur le poids des eaux traités.

5. Procédé selon une des revendications 1 à 4, dans lequel le polymère a la structure: 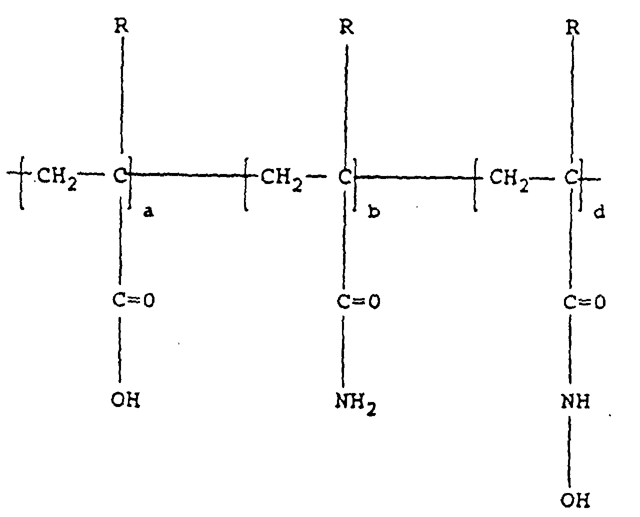 dans laquelle
R est défini comme dans la revendication 1 et
a, b, und d comprennent les relations mutuelles:
1) la somme de a + b + d est suffisante pour donner un poids moléculaire entre 2 000 et 35 000;
2) le rapport d/(a+b+d) est situé dans la gamme de 0,30 à 0,01;
3) le rapport b/(a+b+d) est situé dans la gamme de 0,3 à 0,0;
4) le rapport a/(a+b+d) est situé dans la gamme de 0,99 à 0,40.

6. Procédé selon la revendication 5, dans lequel R représente H et a, b et d ont les relations mutuelles suivantes:
1) la somme de a + b + d est suffisante pour donner un poids meléculaire dans la gamme de 2 500 à 15 000;
2) le rapport d/(a+b+d) est situé dans la gamme de 0,14 à 0,02;
3) le rapport b/(a+b+d) est situé dans la gamme de 0,30 à 0,01;
4) le rapport a/(a+b+d) est situé dans la gamme de 0,97 à 0,56;
et en outre le polymère est utilisé en une quantité de 1 à 100 ppm de polymére, basé sur le poids des eaux traités.

7. Procédé pour l'inhibition de la corrosion de fer et de l'acier doux en contact avec des eaux industriels contenant des ions de dureté choisis du groupe comprenant le calcium, le magnésium ou leurs mélanges, le procédé comprenant le traitement des eaux dites contenant des ions de dureté avec une combinaison des polymères suivants:
A. des polymères solubles dans l'eau ayant un poids moléculaire entre 1 000 et 50 000 et comprenant un functionalité de carboxylate, les polymères dites étant dépourvus de groupes de l'acide hydroxyamique, et les functionalités de carboxylate dites étant dérivées de la présence des unités de mer ayant la structure suivante dans le polymère: 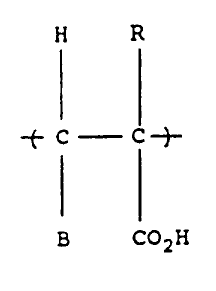 dans laquelle
R est choisi individuellement de H et CH₃;
B représente H, -CO₂H ou -CH₂CO₂H et en outre
les polymères dites contenant aussi au moins un des monomères choisis du groupe comprenant l'acrylamide, le methacrylamide, l'acide 2-acrylamido-2-methylpropanesulfonique, le hydroxypropylacrylate, le hydroxyethylacrylate, le N-t-butylacrylamide, le N-sulfomethylacrylamide, le N-sulfoethylacrylamide, le styrène sulfoné, le vinylsulfonate, l'ester isopropylique des acides acrylique et itaconique, en une quantité de 0 à 50 % en mole; et
B. d'un polymère soluble dans l'eau, étant depourvu des groupes functionels de l'acide phosphorique, ayant un poids moléculaire entre 2 000 et 50 000 et comprenant au moins 1 % en mole de l'unité de mer de l'acide hydroxamique ayant la structure: 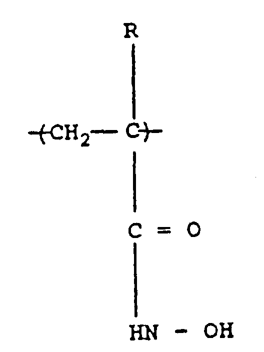 dans laquelle R est individuellement choisi de H et CH₃, ou de ses sels de métal alcalin, de métal alcalino-terreux, d'amine de l'ammonium protoné ou d'amine quaternaire,
le polymère dite contenant aussi au moins un des monomères choisis du groupe comprenant l'acide acrylique, l'acide methacrylique, l'acrylamide, le methacrylamide, l'anhydride de l'acide maléinique, le hydroxypropylacrylate, le hydroxyethylacrylate, le N-t-butylacrylamide, l'acrylamidomethylpropansulfonate, le sulfomethylacrylamide, le sulfoethylacrylamide, le styrène sulfoné, l'acide itaconique et le N-hydroxypropylacrylamide, en une quantité de 50 à 99 % en mole, et
où en outre le rapport de poids du polymère A au polymère B est situé entre 10:1 et 1:10.

8. Procédé selon la revendication 7, dans lequel
les polymères A sont choisis du groupe formé par les homopolymères de l'acide acrylique, l'acide methacrylique et l'anhydride de l'acide maléinique et les copolymères de l'acide acrylique et d'au moins un des monomères choisis du groupe formé par l'acide methacrylique, l'anhydride de l'acide maléinique, l'acrylamide, le methacrylamide, le hydroxypropylacrylate, le N-t-butylacrylamide, le styrène sulfoné, le vinylsulfonate et l'acide itaconique; et
les polymères B contiennent l'unité de mer suivant 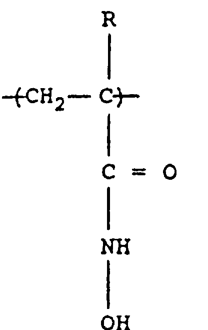 en une quantité de 1 à 30 % en mole et
au moins un des monomères choisis du groupe comprenant l'acide acrylique, l'acide methacrylique, l'acrylamide, le methacrylamide, le sulfomethylacrylamide et le sulfoethylacrylamide en une quantité de 99 à 70 % en mole; et
où en outre le rapport entre les polymères A et les polymères B est situé dans la gamme de 5:1 à 1:5.

9. Procédé selon la revendication 7 ou 8, dans lequel la mélange des polymères comprend au moins un des polymères "A" suivants
polymeres "A":
1. les homopolymères de l'acide acrylique;
2. les homopolymères de l'acide methacrylique;
3. les copolymères de l'acide acrylique et d'au moins un monomère choisi du groupe comprenant l'acide methacrylique, l'acrylamide, le hydroxypropylacrylate, le N-t-butylacrylamide, l'acide 2-acrylamido-2-methylpropane-sulfonique, le sulfomethacrylamide, le sulfoethylacrylamide, et l'acide itaconique;
4. les copolymères de l'anhydride de l'acide maléinique et d'au moins un monomère choisi du groupe formé par l'acide acrylique, l'acide methacrylique, le styrène sulfoné, le vinylsulfonate et l'acide itaconique;
et au moins un des polymères "B" suivants ayant la structure:
polymeres "B": 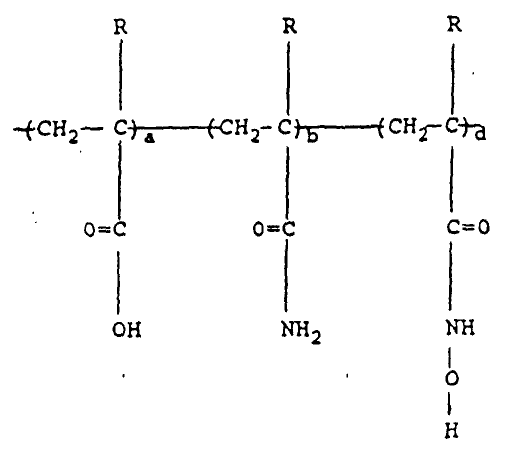
dans laquelle R est choisi individuellement du groupe formé par H et CH₃; et les relations suivantes existent:
1) la somme de (a + b + d) est suffisante pour donner un poids moléculaire dans la gamme de 2 000 à 50 000;
2) le rapport a/(a+b+d) est situé dans la gamme de 0,99 à 0,40;
3) le rapport b/(a+b+d) est situé dans la gamme de 0,30 à 0,0;
4) le rapport d/(a+b+d) est situé dans la gamme de 0,01 à 0,30.
et où en outre les mélanges dites des polymères A et B sont présents en un rapport de poids dans la gamme de 10:1 à 1:10.

10. Procédé selon la revendication 9, dans lequel le mélange des polymères A et B est ajouté aux eaux durs de telle manière qu'il y a de 1 à 50 ppm de polymères B, basé sur les eaux durs traités.

11. Procédé selon une des revendications 1 à 10, dans lequel en outre des autres inhibiteurs de corrosion choisis d'au moins un du groupe comprenant l'orthophosphate, le HEDP, le PBTC, le tolyltriazole, les sels d'étain, les sels de chromate, les sels de nitrite/nitrate et le polyphosphate, sont ajoutés.
